# EUROPEAN PATENT APPLICATION

(11) **EP 0 563 670 A1**
(43) Date of publication of application: **06.10.1993**
(21) Application number: 93104227.9
(22) Date of filing: 16.03.1993
(51) Int. Cl.: B29C 67/22

(54) **Method for forming shower-trays, bathtubs, wash-basins and floor toilets of plastics material and the products obtained**

(30) Priority: 30.03.1992 IT BG920014
(71) Applicant: Baiguini, Giacomo, I-24062 Costa Volpino (Bergamo) (IT)
(72) Inventor: Baiguini, Giacomo, I-24062 Costa Volpino (Bergamo) (IT)
(74) Representative: Luksch, Giorgio, Dr.-Ing.

(57) **Abstract**

This method for forming shower-trays, bathtubs, wash-basins and floor toilets of plastics material consists of joining together two thermoformed plastics shells defining the thickness of said articles, by means of interposing between them polyurethane foam injected preferably with the mould open to reduce the density of the expanded material when consolidated, said shells being structurally different from each other and being conjugate with impressions present in the closure mould, which on being completely closed defines the required thicknesses.

The product obtained by the aforesaid method, and consisting of shower-trays, bathtubs, wash-basins and floor toilets, has a stratified composition comprising an "exposed" surface in the form of a thermoformed sheet of suitable thickness, preferably of acrylic material, a layer or internal thickness of low density rigid expanded polyurethane injected and polymerized directly against said sheet, and finally an inner surface of small thickness, said inner surface being subjected mainly to traction stresses.

## Description

This invention relates to methods for forming shower-trays, bathtubs, wash-basins and floor toilets of plastics material, and to the products obtained by the method.

In the field of shower-trays and like sanitary products there is a known production tendency to replace traditional enamelled metal with plastics articles. In this respect plastics materials offer not only the advantage of lower cost but also the advantages of perfect infinite multi-colouring, high resistance to accidental impact by objects and a high resistance to corrosion.

Industrial attempts made in this direction have resulted in production methods which are currently unsatisfactory.

One of these methods is to form such articles by thermoforming a plastics sheet, generally of methacrylate or anti-impact polystyrene.

Because of the considerable load-bearing function of these articles, they require a bending strength resulting in a considerable thermoformed sheet thickness.

Attempts have been made to overcome the thermoforming difficulties typical of large thicknesses by reinforcing the inner surface of the article by spreading thereon polyester resins plus glass fibres. These results have also not been satisfactory, and attempts have therefore been made to form such articles by moulding a shaped core of expanded polyurethane and gluing it to two shells represented by an upper exposed shell and a lower inner or resting shell.

This is done because if the polyurethane were to be simply foamed on the inside of the article it would result in aesthetically unacceptable deformation of the article during hardening.

An object of the present invention is to define a production method for shower-trays, bathtubs, wash-basins and floor toilets of plastics material which results in high-quality appearance.

A further object is to define a production method which at low cost results in high bending strength of the articles obtained,

A further object is to define a method by which thermal insulation can be achieved, this being particularly useful for bathtubs.

These and further objects will be seen to be attained on reading the detailed description given hereinafter of a method for forming shower-trays, bathtubs, wash-basins and floor toilets of plastics material, characterised by joining together two thermoformed plastics shells defining the thickness of said articles, by means of interposing between them polyurethane foam injected preferably with the mould open to reduce the density of the expanded material when consolidated, said shells being structurally different from each other and being conjugate with impressions present in the closure mould, which on being completely closed defines the required thicknesses.

The product obtained by the aforesaid method, and consisting of shower-trays, bathtubs, wash-basins and floor toilets, is characterised by a stratified composition comprising an "exposed" surface in the form of a thermoformed sheet of suitable thickness, preferably of acrylic material, a layer or internal thickness of low density rigid expanded polyurethane injected and polymerized directly against said sheet, and finally an inner surface of small thickness, said inner surface being subjected mainly to traction stresses.

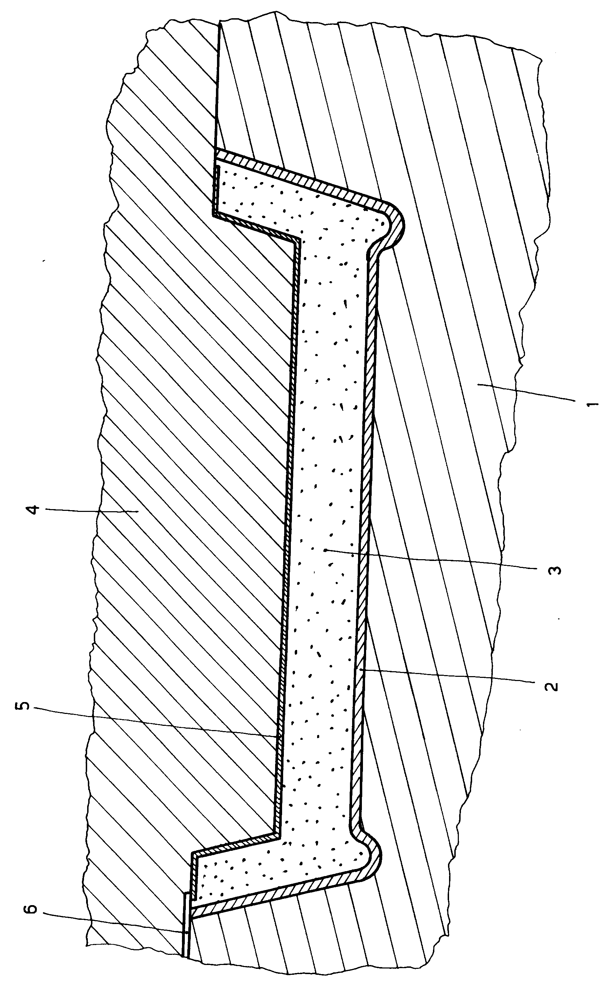

The invention is illustrated by way of non-limiting example on the accompanying drawing, which shows a section through an article positioned inverted within a forming mould.

With reference to the said drawing, a forming mould 1 is constructed of resin and/or aluminium.

On its impression is rested a conjugate plastics sheet 2 of thickness indicatively between 3 and 8 mm according to the type of material, and previously shaped by thermoforming.

This sheet is that which when the article is installed will be exposed to view.

Expanded polyurethane 3 is foamed over the sheet 2 in a properly distributed manner and in a quantity judged to be optimum for filling the mould cavity.

A thin sheet 5 of thickness about 0.5 mm and also preferably thermoformed is then fixed to a counter-mould 4 which had been previously kept at a distance so as not to hinder the sheet positioning or foaming operations.

When foaming has been completed the counter-mould 4 is lowered into contact with the mould 1.

The method of lowering depends on the type of mould, whether with one hinged edge and the other with manual closure hooks, or whether associated with a vertically guided slide press. In this respect the choice of one or other mould depends on the type of production involved (whether of small series or large series).

As a result of this the polyurethane foam is distributed until it fills every cavity of the mould, which has as its impression the actual inner surface of the sheet 2. Any excess foam and any air bubbles are evacuated through small ports 6 distributed along the mould closure edge.

In this manner a rigid expanded polyurethane solid of low density (about 60 kg/cm³) is formed which is strongly joined or bonded to the two peripherally located sheets 2 and 5, which are of plastics material of considerable strength. Of these sheets, the sheet 2, having a thickness indicatively of between 3 and 8 mm, is of high quality material such as acrylic resin or polystyrene.

The sheet 2 could also be composite consisting of two materials, one having an attractive and resistant surface (acrylic or polystyrene), and the other less resistant and less attractive but more economical and suitable for providing the necessary indeformability under concentrated loads (such as those due to the resting of the heel)

Comparing the structure of the shower-tray (or other article) with a beam between lateral supports and stressed under flexure by a central load, it will be apparent that the thin sheet 5, which when the article is installed is located in a position the reverse of that during forming, is stressed exclusively by traction. Plastics materials suitable for its construction include for example polyvinyl chloride, polystyrene etc.

This advantageously means that not only can the sheet 5 be of minimum thickness, but that non-plastic materials of lesser cost and/or of sufficient strength can be used, such as paper or aluminium.

The use of this thin inner sheet 5 means that it advantageously exerts on the expanded polyurethane in contact with it a tension able to balance the tension which would otherwise arise in the exposed sheet 2 if it were used alone, such tension detracting from the desired surface perfection of the exposed shape of the sheet 2.

A further advantage of this method of production is that it avoids the use of costly wax or silicone separation agents on the containing or forming mould, such agents being otherwise particularly necessary because of the high adhesiveness of the polyurethane. In this respect, as the polyurethane lies only against the inner sides of the sheet 2 and thin sheet 5, it does not adhere to the mould and the article can be extracted therefrom with extreme ease.

## Claims

1. A method for forming shower-trays, bathtubs, wash-basins and floor toilets of plastics material, characterised by joining together two thermoformed plastics shells (2, 5) defining the thickness of said articles, by means of interposing between them polyurethane foam injected preferably with the mould open to reduce the density of the expanded material when consolidated, said shells being structurally different from each other and being conjugate with impressions present in the closure mould, which on being completely closed defines the required thicknesses.

2. A product obtained by the aforesaid method, and consisting of shower-trays, bathtubs, wash-basins and floor toilets, characterised by a stratified composition comprising an "exposed" surface in the form of a thermoformed sheet (2) of suitable thickness, preferably of acrylic material, a layer or internal thickness (3) of low density rigid expanded polyurethane injected and polymerized directly against said sheet, and finally an inner surface of small thickness, said inner surface being subjected mainly to traction stresses.
